Europäisches Patentamt

(19) European Patent Office

Office européen des brevets

(11) Numéro de publication: **0 079 651**
**B1**

(12) **FASCICULE DE BREVET EUROPÉEN**

(45) Date de publication du fascicule du brevet:
**12.07.89**

(51) Int. Cl.⁴: **H 01 J 29/38**, G 01 T 1/20

(21) Numéro de dépôt: **82201421.3**

(22) Date de dépôt: **10.11.82**

(54) Structure de détection photoélectrique.

(30) Priorité: **13.11.81 FR 8121249**

(43) Date de publication de la demande:
**25.05.83 Bulletin 83/21**

(45) Mention de la délivrance du brevet:
**12.07.89 Bulletin 89/28**

(84) Etats contractants désignés:
**DE FR GB IT**

(56) Documents cité:
**GB-A-1 005 708**
**GB-A-2 051 348**

**IEEE TRANSACTIONS ON ELECTRON DEVICES,
vol. ED-13, no. 12, décembre 1966, pages 921-924,
New York (USA); J.A. LOVE III et al.: "Analysis of
interference photocathodes"
JOURNAL OF PHYSICS D: APPLIED PHYSICS, vol.
9, no. 5, 1976, pages 785-794, Letchworth (GB); J.R.
HOWORTH et al.: "Transmission silicon
photoemitters and electron multipliers"
JOURNAL OF PHYSICS D: APPLIED PHYSICS, vol.
8, no. 1, 1975, pages 69-84, Letchworth (GB); A.A.
DOWMAN et al.: "Scanning electron diffraction
studies on alkali antimonide photocathodes,
including the S20"**

(73) Titulaire: **Laboratoires d'Electronique et de
Physique Appliquée L.E.P., 3, Avenue Descartes,
F-94450 Limeil- Brévannes (FR)**
(84) Etats contractants désignés: **FR**

(73) Titulaire: **N.V. Philips' Gloeilampenfabrieken,
Groenewoudseweg 1, NL- 5621 BA Eindhoven (NL)**
(84) Etats contractants désignés: **DE GB IT**

(72) Inventeur: **Dolizy, Pierre, Société Civile S.P.I.D.
209 rue de l'Université, F-75007 Paris (FR)**
Inventeur: **Groliere, Françoise, Société Civile
S.P.I.D. 209 rue de l'Université, F-75007 Paris (FR)**
Inventeur: **Maniguet, François, Société Civile
S.P.I.D. 209 rue de l'Université, F-75007 Paris (FR)**

(74) Mandataire: **Landousy, Christian, Société Civile
S.P.I.D. 209, Rue de l'Université, F-75007 Paris
(FR)**

EP 0 079 651 B1

**EP 0 079 651 B1**

**Description**

La présente invention concerne une structure de détection photoélectrique constituée d'une couche photoémissive à base de métaux alcalins déposée sur un substrat constitué en un matériau transparent aux radiations de la lumière visible et du proche infrarouge et en forme de plaque à faces planes, convexes ou concaves de courbures limitées de telle sorte que l'incidence des rayons en faisceaux parallèles n'excède pas 15 à 20°, le substrat étant muni, sur la face d'incidence des radiations, de moyens d'atténuation de la réflexion des radiations sur cette face. L'épaisseur de la couche photoémissive est dimensionnée pour que, compte-tenu de la nature de son matériau constitutif, de la nature du substrat et desdits moyens optiques, le rendement photoélectrique de la structure soit optimalisé pour un certain domaine spectral des radiations incidentes.

Une application de la présente invention est en particulier une structure de détection utilisable en gammagraphie. D'une façon générale, l'invention se trouve être en rapport étroit avec les dispositifs incluant à l'entrée une telle structure de détection photoélectrique, tels les cellules photoélectriques, les tubes intensificateurs d'image, les tubes intégrés aux systèmes de prise de vue de télévision ou encore les photomultiplicateurs. Dans ces dispositifs, lorsque la structure de détection photoélectrique utilisée comporte une couche photoémissive déposée directement sur le substrat, il s'ensuit généralement une mauvaise adaptation optique de la couche photoémissive sur le substrat, si bien qu'une bonne partie de la lumière incidente sur le substrat est mal utilisée pour la conversion des photons en électrons et que l'efficacité de détection photoélectrique de ladite stucture se trouve considérablement réduite.

L'art antérieur, signalé par exemple dans le brevet des Etats-Unis n° 3 254 253, à prévu d'améliorer cette efficacité en atténuant les phénomènes de réflexion qui se produisent à l'interface substrat/couche photoémissive au moyen d'au moins une couche intermédiaire transparente aux radiations incidentes, placée entre substrat et couche photoémissive et dont l'indice de réfraction est compris entre ceux desdits substrat et couche photoémissive, respectivement de l'ordre de 1,5 et 3. L'épaisseur de la couche intermédiaire doit être ajustée pour que, compte-tenu des constantes optiques des matériaux de substrat et de couche photoémissive, les lumières réfléchies respectivement à l'interface substrat/couche intermédiaire et à l'interface couche intermédiaire/couche photoémissive, soient sensiblement de même amplitude et de phases opposées, si bien qu'elles tendent à s'annuler mutuellement par interférence. L'élaboration de cette couche intermédiaire avec une épaisseur mesurée avec précision rend délicate la construction de la structure. Pour minimiser les pertes par réflexion à l'interface substrat/couche photoémissive, on peut penser à choisir un substrat d'indice de réfraction plus élevé que celui du verre ordinaire. C'est ce qui est réalisé, du moins partiellement, comme décrit dans "Actualités R.T.C." n 41, avril 1978, p. 22 - 23, lorsque la couche photoémissive est déposée sur la section d'un faisceau de fibres conductrices de la lumière et dont le verre de coeur est un verre au lanthane d'indice 1,9. Mais, le dispositif présente alors deux sortes d'inconvénients. D'une part, la structure est surtout adaptée à une détection avec transport d'image grâce aux fibres optiques qu'elle comporte et elle est beaucoup moins apte, à cause desdites fibres, à une détection de phénomènes en volume sans formation d'image. D'autre part, du fait du plus fort indice du verre de coeur de fibre par rapport à l'air, il en résulte une mauvaise adaptation optique de la structure au niveau de la face d'entrée de la structure.

D'autre part le document GB A 2 051 348 décrit un détecteur avec un scintillateur devant le substrat de verre. Pour assurer le transfert du rayonnement émis par le scintillateur vers la face d'entrée du photomultiplicateur des couches intermédiaires d'indices variables sont interposées celles-ci ne peuvent transmettre qu'une partie du flux lumineux. Ce document ne concerne que l'interface scintillateur-substrat de verre et n'examine pas l'interface substrat de verre-photocathode ni les mécanismes d'émission d'électrons par la photocathode c'est-à-dire le rendement photoélectrique de l'ensemble du détecteur.

Le but de l'invention est de proposer une structure de détection photoélectrique de construction plus facile à réaliser, du fait de l'inexistence de couche intermédiaire entre substrat et couche photoémissive, sans que le rendement photoélectrique soit sensiblement différent. Un autre but de l'invention est encore que cette structure soit apte à une détection en volume de phénomènes photoniques. Pour cela, l'invention propose d'utiliser comme substrat de couche photoémissive une plaque massive en matériau transparent d'indice de réfraction de l'ordre de 2. De plus, pour éviter une mauvaise adaptation de la structure du côté face d'entrée, celle-ci est munie de moyens atténuant la réflexion de radiations sur cette face. Ces moyens sont en particulier une couche anti-reflet de l'art connu.

Selon une variante de l'invention, la structure est remarquable en ce que l'indice de réfraction du matériau du substrat pour lesdites radiations est voisin de 2, le matériau de substrat étant choisi parmi les verres suivants: verre au lanthane, verre au baryum, verre au titane, la couche photoémissive étant une couche alcaline de formule chimique $Sb\ K_2\ Cs$, ou $Sb\ Rb_2\ Cs$ ou $Sb\ Cs_3$.

Selon une autre variante de l'invention, la structure est remarquable en ce que la l'indice de réfraction du matériau de substrat pour lesdites radiations est voisin de 2, le matériau de substrat étant choisi parmi les verres suivants: verre au lanthane, verre au baryum, verre au titane, la couche photoémissive étant tri-alcaline de formule chimique $(Sb\ Na_2K,\ Cs)$.

Selon une autre variante, la structure est remarquable en ce que les moyens d'atténuation de la réflexion des radiations incidentes sur le substrat sont constitués d'une lame de cristal scintillateur plaquée contre le substrat, ledit cristal présentant un indice de réfraction de la lumière voisin de 1,8, tel un cristal de formule chimique $(CsI,\ Na)$, $(CsI,\ Tl)$. L'indice élevé de ce cristal, proche de celui du substrat, permet l'adaptation optique désirée. L'invention consiste alors en une structure de détection utilisable par exemple en

2

gammagraphie ou en spectrométrie de photons X.

L'invention apparaît sous plusieurs de ses modes de réalisation donnés à titre d'exemples, non limitatifs, dans la description suivante, celle-ci étant accompagnée de dessins qui représentent:

Figure 1: une vue schématique de la structure photoélectrique selon l'invention;

Figure 2: des courbes donnant le rendement photoélectrique en fonction de l'épaisseur de la couche photoémissive d'une structure de détection photoélectrique selon un premier mode de réalisation de l'invention, la couche photoémissive étant tri-alcaline de formule (Sb Na$_2$ K Cs), comparé au rendement de la même couche photoémissive déposée sur un verre ordinaire;

Figure 3: des courbes donnant la sensibilité spectrale de la structure selon le premier mode de réalisation munie d'une couche S 20 ou S 25 et celles des mêmes couches déposées sur verre ordinaire;

Figure 4: des courbes donnant le rendement photoélectrique en fonction de l'épaisseur de la couche photoémissive d'une structure de détection photoélectrique selon selon un second mode de réalisation de l'invention, la couche photoémissive étant bi-alcaline de formule chimique Sb K$_2$ Cs, comparé au rendement de la même couche déposée sur un verre ordinaire;

Figure 5: une vue en coupe d'un troisième mode de réalisation de l'invention comportant à l'entrée un cristal scintillateur.

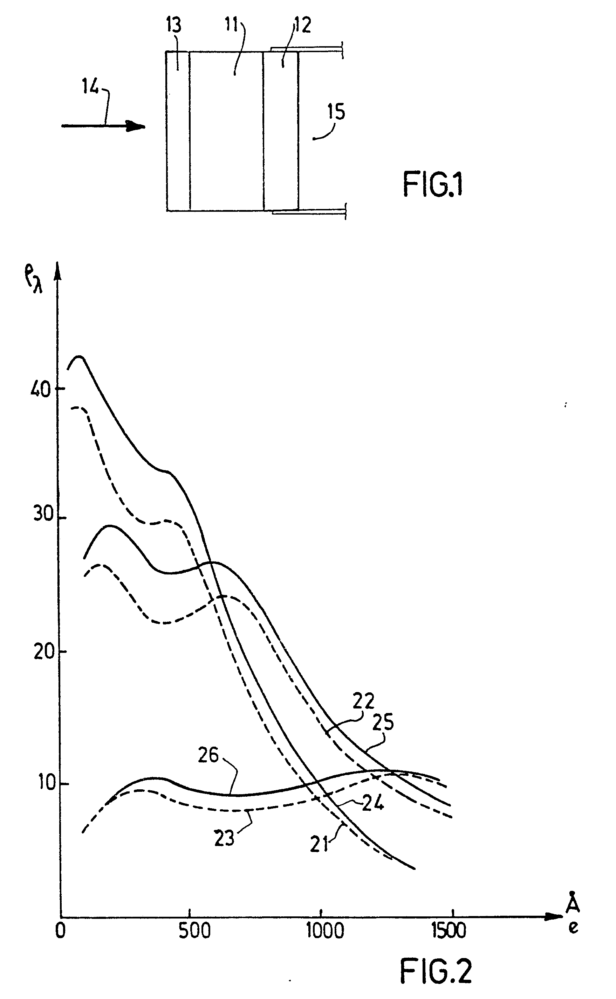

La figure 1 représente la structure selon l'invention comportant le substrat constitué d'une plaque 11 transparente aux radiations de la lumière visible et proche infrarouge, la couche photoémissive 12 d'épaisseur "e" et la couche anti-reflet 13 sur la face de substrat opposé à la couche photoémissive. Sur la figure 1, les faces de la plaque 11 sont supposées planes et parallèles. L'invention s'étend au cas où lesdites faces sont concaves ou convexes dans la mesure où leurs courbures sont limitées de telle sorte que l'incidence des rayons de lumière en faisceau parallèle n'excède pas 15 à 20°. Cette structure est censée constituer l'entrée d'un tube photoélectrique, la lumière à détecter se présentant du côté gauche de l'empilement dans le sens de la flèche 14, le vide 15 du tube se trouvant du côté droit. Le substrat est constitué d'un matériau transparent à la lumière visible et proche infrarouge parmi ceux d'indices de réfraction les plus élevés de l'ordre de 2, un verre au lanthane par exemple, à comparer à celui de l'ordre de 3 des matériaux photoémissifs. La couche anti-reflet 13 a pour mission d'adapter optiquement ce substrat du côté extérieur au tube, lequel est placé par exemple dans l'air, donc dans un milieu d'indice de réfraction de l'ordre de 1, de manière à minimiser le plus possible la réflexion des radiations à l'interface substrat/extérieur du tube. Selon un premier mode de réalisation de la structure, la couche photoémissive 12 est constituée d'un matériau tri-alcalin de formule chimique Sb Na$_2$ K Cs, du type de ceux constitutifs d'une couche S 20 ou S 25. Le substrat est un verre d'indice de réfraction élevé, un verre au lanthane par exemple d'indice 1,9 et la couche anti-reflet est de l'art connu, par exemple une couche en un matériau tel que Mg F$_2$, Na$_3$ Al F$_6$, Ca F$_2$, Sr F$_2$, Sa F$_2$, Al F$_3$, (Mg F$_2$, Ce F$_3$), Th F$_4$.

La figure 2 donne, en valeur relative, le rendement photoélectrique $\rho_\lambda$ à la longueur d'onde $\lambda$ des radiations, d'une telle structure photoélectrique en fonction de l'épaisseur "e" de la couche photoémissive, indiquée en abscisse, pour trois longueurs d'onde de radiations respectivement $\lambda = 430$ nm, $\lambda = 520$ nm, $\lambda = 800$ nm, situées dans les parties respectivement bleue, verte et rouge du spectre. Les courbes représentatives du rendement, pour chacune de ces longueurs d'onde, sont respectivement les courbes en traits pleins 24, 25, 26. Ces courbes sont à comparer respectivement avec les courbes en traits interrompus 21, 22, 23 indiquant, pour les mêmes longueurs d'onde, le rendement photoélectrique de la structure photoélectrique comportant la même couche photoémissive déposée comme habituellement sur un verre d'indice de réfraction d'environ 1,5 en fonction de l'épaisseur de ladite couche photoémissive. La comparaison de ces rendements est indiquée dans le tableau I. Pour une couche dite S 20 correspondant à une épaisseur e 20 = nm, le gain est de l'ordre de 20 % dans le bleu. Pour une couche S 25 correspondant à une épaisseur e = 120 nm, le gain est de l'ordre de 15 % et 10 % respectivement dans le vert et le rouge.

**Tableau I**

| Type de couche photoémissive | S 20 | S 25 | | Bialcalines | |
|---|---|---|---|---|---|
| Radiation incidente | bleu | vert | rouge | bleu | vert |
| Gain | 20 % | 15 % | 10 % | 8 % | 6 % |

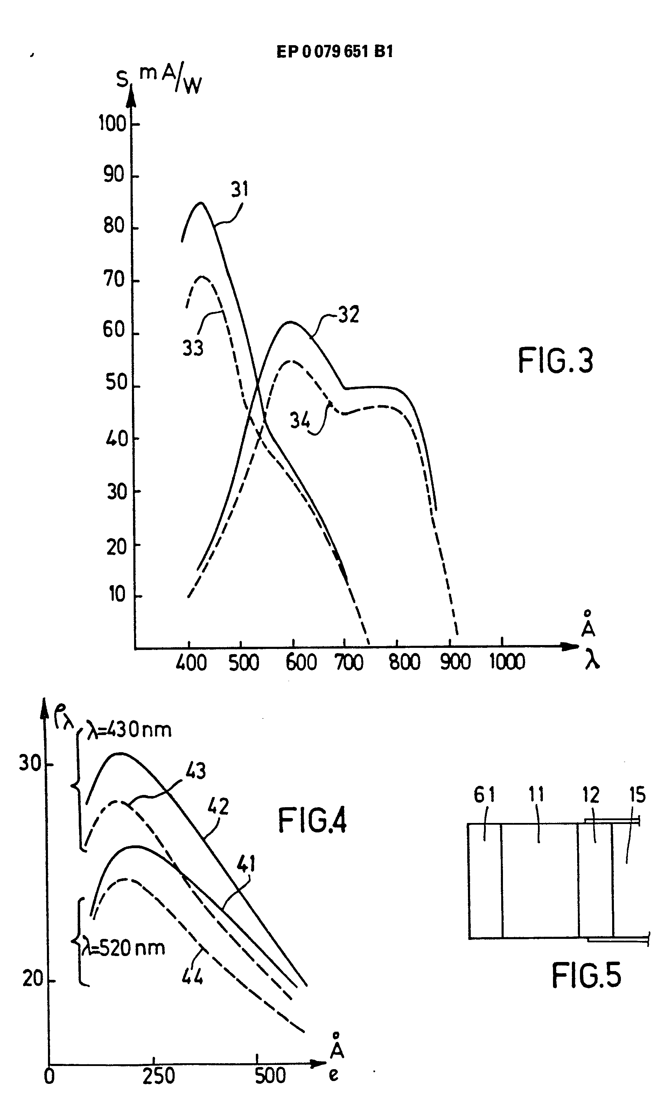

La figure 3 indique respectivement, pour une couche S 20 et une couche S 25, la sensibilité spectrale de structure selon ce premier mode de réalisation comparée à la sensibilité spectrale de structure de l'art antérieur comportant respectivement la même couche S 20 et la même couche S 25, déposées sur verre ordinaire. Les courbes relatives à l'invention sont les courbes en traits pleins 31 et 32 pour les couches respectivement S 20 et S 25. Les courbes relatives à l'art antérieur sont les courbes en traits interrompus respectivement 33 et 34.

Selon un second mode de réalisation, la couche photoémissive 12 est bi-alcaline de type Sb K$_2$ Cs, Sb Rb$_2$ Cs ou mono-alcaline Sb Cs$_3$, le substrat 11 est encore un verre d'indice de réfraction élevé, verre au lanthane par exemple, d'indice 1,9; la couche 13 anti-reflet étant de l'art connu.

La figure 4 donne, selon ce second mode de réalisation, d'une façon semblable à la figure 2, les rendements photoélectriques aux deux longueurs d'onde: $\lambda = 430$ nm et $\lambda = 520$ nm de la structure selon l'invention et de

3

la structure comportant la couche photoémissive déposée sur un verre d'indice 1,5. Les courbes représentatives du rendement photoélectrique $p_\lambda$ en fonction de l'épaisseur de la couche sont respectivement 41, 42 pour la structure selon l'invention, et 43, 44 pour l'art connu. La comparaison des résultats, résumés également dans le tableau I, indique, pour une épaisseur de couche photoémissive e = 17,5 nm, un gain de 8 à dans le bleu et de 6 % dans le vert.

La figure 5 représente un troisième mode de réalisation de l'invention. La structure est munie, du côté face d'entrée du substrat, d'un cristal scintillateur de lumière 61 sous l'action, par exemple, de rayons X ou gamma. Ce cristal 61 peut présenter la forme d'une lame à faces parallèles. Le cristal ainsi que la face d'entrée du substrat de photocathode peuvent en fait avoir des formes très diverses plane, sphérique, concave, convexe... Son matériau constitutif est à fort indice de réfraction de l'ordre de 1,8 comme par exemple celui de formule chimique (CsI, Na), (CsI, Tl). La structure bénéficie ainsi d'une bonne adaptation optique à l'interface scintillateur/substrat de photocathode sans l'utilisation de couches anti-reflet comme dans les modes précédents de réalisation de l'invention.

**Revendications**

1. Structure de détection photoélectrique constituée d'une couche photoémissive à base de métaux alcalins déposée sur un substrat constitué en un matériau transparent aux radiations de la lumière visible et du proche infrarouge et en forme de plaque à faces planes, convexes ou concaves de courbures limitées de telle sorte que l'incidence des rayons en faisceaux parallèles n'excède pas 15 à 20°, le substrat étant muni, sur la face d'incidence des radiations, de moyens d'atténuation de la réflexion des radiations sur cette face, caractérisée en ce que l'indice de réfraction du matériau de substrat pour lesdites radiations est voisin de 2, le matériau de substrat étant choisi parmi les verres suivants: verre au lanthane, verre au baryum, verre au titane, la couche photoémissive étant une couche alcaline de formule chimique Sb $K_2$ Cs, ou Sb $Rb_2$ Cs ou Sb $Cs_3$.

2. Structure de détection photoélectrique selon la revendication 1, caractérisée en ce que l'épaisseur de la couche photoémissive est de l'ordre de 17,5 nm.

3. Structure de détection photoélectrique constituée d'une couche photoémissive à base de métaux alcalins déposée sur un substrat constitué en un matériau transparent aux radiations de la lumière visible et du proche infrarouge et en forme de plaque à faces planes, convexes ou concaves de courbures limitées de telle sorte que l'incidence des rayons en faisceaux parallèles n'excède pas 15 à 20°, le substrat étant muni, sur la face d'incidence des radiations, de moyens d'atténuation de la réflexion des radiations sur cette face, caractérisée en ce que l'indice de réfraction du matériau de substrat pour lesdites radiations est voisin de 2, le matériau de substrat étant choisi parmi les verres suivants: verre au lanthane, verre au baryum, verre au titane, la couche photoémissive étant tri-alcaline de formule chimique (Sb $Na_2$K, Cs).

4. Structure de détection photoélectrique selon la revendication 3, caractérisée en ce que l'épaisseur de la couche photoémissive est de 20 nm.

5. Structure de détection photoélectrique selon la revendication 3, caractérisée en ce que l'épaisseur de la couche photoémissive est de 120 nm.

6. Structure de détection photoélectrique appliquée à la détection de rayons X ou gamma selon une des revendications 1 à 5, caractérisée en ce que les moyens d'atténuation de la réflexion des radiations incidentes sur le substrat sont constitués d'une lame de cristal scintillateur plaquée contre le substrat, ledit cristal présentant un indice de réfraction de la lumière voisin de 1,8, tel un cristal de formule chimique (CsI, Na), (CsI, Tl).

7. Structure de détection photoélectrique selon une des revendications 1 à 5, caractérisée en ce que les moyens d'atténuation de la réflexion des radiations sur la face d'incidence du substrat sont constitués de couches anti-reflet.

**Patentansprüche**

1. Photoelektrische Detektorstruktur, bestehend aus einer Photoemissionsschicht auf Basis von Alkalimetallen auf einem Substrat, das aus für Strahlung im sichtbaren Lichtbereich und im nahen Infrarotbereich durchlässigem Material besteht und die Form einer Platte mit ebenen, konvexen oder konkaven Flächen besitzt, deren Krümmung derart begrenzt ist, daß der Einfallswinkel der parallelen Bündelstrahlen 15 bis 20 nicht Überschreitet, wobei das Substrat auf der Strahlungseinfallsfläche mit Mitteln zum Verringern der Strahlungsreflexion an dieser Fläche versehen ist, <u>dadurch gekennzeichnet,</u> daß der Brechungsindex des Substratmaterials für diese Strahlung nahe bei 2 liegt, und das Substratmaterial aus folgenden Gläsern ausgewählt wird: Lanthanglas, Bariumglas, Titanglas, wobei die Photoemissionsschicht eine Alkalischicht der chemischen Formel Sb $K_2$ Cs oder Sb $Rb_2$ Cs oder Sb $Cs_3$ ist.

2. Photoelektrische Detektorstruktur nach Anspruch 1, <u>dadurch gekennzeichnet,</u> daß die Dicke der Photoemissionsschicht in der Größenordnung von 17,5 nm liegt.

3. Photoelektrische Detektorstruktur, bestehend aus einer Photoemissionsschicht auf Basis von Alkalimetallen auf einem Substrat, das aus für Strahlung im sichtbaren Lichtbereich und im nahen Infrarotbereich durchlässigem Material besteht und die Form einer Platte mit ebenen, konvexen oder konkaven Flächen besitzt, deren Krümmung derart begrenzt ist, daß der Einfallswinkel der parallelen Bündelstrahlen 15 bis 20 nicht überschreitet, wobei das Substrat auf der Strahlungseinfallsfläche mit Mitteln zum Verringern der Strahlungsreflexion an dieser Fläche versehen ist, dadurch gekennzeichnet, daß der Brechungsindex des Substratmaterials für diese Strahlung nahe bei 2 liegt, und das Substratmaterial aus folgenden Gläsern ausgewählt wird: Lanthanglas, Bariumglas, Titanglas, wobei die Photoemissionsschicht eine Tri-Alkalischicht der chemischen Formel $(Sb\ Na_2K,\ Cs)$ ist.

4. Photoelektrische Detektorstruktur nach Anspruch 3, dadurch gekennzeichnet, daß die Dicke der Photoemissionsschicht 20 nm beträgt.

5. Photoelektrische Detektorstruktur nach Anspruch 3, dadurch gekennzeichnet, daß die Dicke der Photoemissionsschicht 120 nm beträgt.

6. Photoelektrische Detektorstruktur zum Detektieren von Röntgen- oder Gammastrahlung nach einem der Ansprüche 1 bis 5, dadurch gekennzeichnet, daß die Mittel zur Reflexionsverringerung für die auf das Substrat einfallenden Strahlen aus einer an das Substrat gepreßten Szintillationskristall-Lamelle bestehen, wobei der Kristall einen Lichtbrechnungsindex nahe bei 1,8 besitzt, wie z. B. ein Kristall der chemischen Formel (CsI, Na), (CsI, Tl).

7. Photoelektrische Detektorstruktur nach einem der Ansprüche 1 bis 5, dadurch gekennzeichnet, daß die Mittel zur Reflexionsverringerung für die auf die Einfallsfläche des Substrats ankommenden Strahlen aus Entspiegelungsschichten bestehen.

## Claims

1. A photo-electric detection structure constituted by a photo-emissive layer on the basis of alkaline metals deposited on a substrate of a material which is transparent to radiations of visible light and the near infrared and is in the form of a plate having plain, convex or concave faces with limited curvature such, that the angle of incidence of the parallel-beam rays does not exceed 15 to 20°, the substrate being provided on the face on which the radiations are incident with means attenuating the reflection of the radiations incident on this face, characterized in that the refractive index of the substrate material for said radiations is near 2, the substrate material having been chosen from the following glasses: lanthanum glass, barium glass, titanium glass, the photo-emissive layer being an alkaline layer of the chemical formula $SbK_2Cs$, or $SbRb_2Cs$ or $SbCs_3$.

2. A photo-electric detection structure as claimed in claim 1, characterized in that the thickness of the photo-emissive layer is of the order of 17.5 nm.

3. A photo-electric detection structure constituted by a photo-emissive layer on the basis of alkaline metals which are deposited on a substrate made of a material which is transparent to radiations of visible light and the near infrared and is in the form of a plate having plain, convex or concave faces with limited curvatures such, that the angle of incidence of the parallel-beam rays does not exceed 15 to 20°, the substrate being provided on the face on which the radiations are incident, with means attenuating the reflection of the radiations incident on this face, characterized in that the refractive index of the substrate material for said radiations is near 2, the substrate material being chosen from the following glasses: lanthanum glass, barium glass, titanium glass, the photo-emissive layer being tri-alkaline defined by the chemical formula $(SbNa_2K,\ Cs)$.

4. A photo-electric detection structure as claimed in claim 3, characterized in that the thickness of the photo-emissive layer is 20 nm.

5. A photo-electric detection structure as claimed in claim 3, characterized in that the thickness of the photo-emissive layer is 120 nm.

6. A photo-electric detection structure used for the detection of X or gamma rays, as claimed in any one of the claims 1 to 5, characterized in that the means for attenuating the reflection of the radiations incident on the substrate are constituted by a thin scintillator crystal sheet cemented to the substrate, said crystal having a refractive index for light near 1.8, for example a crystal defined by the chemical formula (CsI, Na), (CsI, Tl).

7. A photo-electric detection structure as claimed in any one of the claims 1 to 5, characterized in that the means for attenuating the reflection of the radiations on the face of incidence of the substrate are constituted by anti-reflection layers.

FIG.1

FIG.2

1

FIG.3

FIG.4

FIG.5

3